# EUROPEAN PATENT APPLICATION

(11) **EP 4 644 103 A1**
(43) Date of publication of application: **05.11.2025**
(21) Application number: 25173111.3
(22) Date of filing: 29.04.2025
(51) Int. Cl.: B29C 71/02, B29C 43/00, B29K 23/00

(54) **METHOD TO PREPARE HIGH TEMPERATURE PRESSURE ANNEALED MEDICAL GRADE UHMWPE**

(30) Priority: 29.04.2024 US 202463639776 P
(71) Applicant: Mitsubishi Chemical America, Inc., Charlotte, NC 28269 (US)
(72) Inventor: SCHINDLER, Katie M., Charlotte, 28269 (US); TINKER, Jared, Charlotte, 28269 (US); GASKILL, Scott A., Charlotte, 28269 (US); KINSEY, Steven D., Charlotte, 28269 (US)
(74) Representative: LLR

(57) **Abstract**

A method to prepare high strength medical grade ultra high molecular weight polyethylene (UHMWPE) units having minimal oxidation losses is provided. Consolidated medical grade UHMWPE is high temperature annealed within a sealable and pressurizable vessel having an inert gas.

## Description

### CROSS REFERENCE TO RELATED APPLICATIONS

This application claims priority to U.S. Provisional Application No. 63/639,776, filed April 29, 2024, the disclosure of which is incorporated herein by reference in its entirety.

### BACKGROUND OF THE INVENTION

Medical grade ultrahigh molecular weight polyethylene (UHMWPE) is employed to prepare orthopedic medical devices including, for example, joint replacements because it is compatible with body tissues, has high wear resistance, high tensile strength, high resistance to oxidation and low coefficient of friction. However, there is an ever-increasing goal to enhance the strength properties of the UHMWPE device to meet industry Izod Impact Strength requirements. There is a variety of commercially available UHMWPEs marketed as medical grade resins (Celanese) and new types have been developed for the market.

In preparing end use products for the medical industry, the resin powder is consolidated under high temperature and pressure to fuse the powder granules into a single solid unit of material. Consolidation of UHMWPE may be conducted by ram extrusion, compression molding, hot isostatic pressing or direct compression molding. These methods are conventionally known and applied in the industry.

However, these consolidated materials do not meet all the performance properties necessary for use in orthopedic medical devices and are often further processed to enhance strength and wear properties. Conventionally, methods to enhance the mechanical properties of the UHMWPE include techniques such as chemical crosslinking, gamma irradiation, conventional annealing, deformation and doping with an antioxidant.

However, each of these methods may also create effects which are detrimental to the performance properties of the UHMWPE. For example, chemical crosslinking introduces chemical components to the matrix which modifies the chemistry of the UHMWPE and affect the suitability as a medical device. When UHMWPE is crosslinked by gamma irradiation, which is employed to break carbon-carbon bonds of the polyethylene chain and create free radicals which recombine and form crosslinked polymer chains, there remains a concentration of free radicals in the polymer matrix which are available for reaction with oxygen in the environment. Such reaction leads to degradation of the polymer. Free radicals within the matrix may be eliminated by heating the material above the melt temperature of the polymer; however, such heat treatment may lower the mechanical properties. Deformation of the UHMWPE after crosslinking may also be used to reduce the concentration of free radicals, but the temperatures employed in the deformation operation may also result in reduction of mechanical properties.

High temperature annealing (HTA) has been shown to improve the mechanical properties of UHMWPE. In a HTA operation, the UHMWPE is placed in an oven purged with inert gas and heated to a temperature in a range from approaching the melting temperature to temperatures twice the melting point or more. High temperature annealing is considered to enhance chain diffusion across fusion boundaries remaining from the process used to consolidate the UHMWPE granules and removes defects at the fusion boundaries, thus enhancing the strength and toughness of the UHMWPE.

However, reports of the use of HTA to date, have only been described on a lab scale using small inert ovens and small UHMWPE samples. Moreover, HTA can result in high surface oxidation and annealed material having inconsistent physical and mechanical properties due to a non-homogeneous inert environment formed within the annealing oven. The non-homogeneous inert environment may be a result of inadequate sealing of the oven and/or inadequate circulation of the inert gas within the oven. Commercial grade inert ovens are available; however, these ovens do not provide a sufficiently consistent inert environment at the high temperatures employed with HTA and therefore, high surface oxidation of the UHMWPE unit results. The oxidized surface must be removed to prepare the medical device resulting in materials waste and increased manufacturing costs.

Therefore, there is a need for a method to apply HTA to large or production scale quantities of consolidated medical grade UHMWPE which results in uniform enhanced mechanical and physical properties with minimum or no surface oxidation.

### SUMMARY OF THE INVENTION

This and other objects are obtained within the disclosure of the present invention, the first embodiment of which provides a method for high temperature annealing of ultra high molecular weight polyethylene (UHMWPE), comprising:
consolidating UHMWPE resin powder into a unit of designated shape and size;
placing the consolidated UHMWPE unit into a sealable and pressurizable vessel of size and form to contain the UHMWPE unit;
inerting the interior of the vessel containing the consolidated UHMWPE unit;
sealing the inerted vessel containing the consolidated UHMWPE unit;
placing the sealed inerted vessel in an oven at ambient temperature;
heating the sealed vessel in the oven from ambient temperature to an annealing temperature;
maintaining the sealed vessel at the annealing temperature for a designated length of time;
upon completion of the annealing designated time, cooling the sealed vessel;
opening the vessel to vent the inert gas; and
removing the high temperature annealed consolidated UHMWPE unit from the vessel.

In an aspect of the first embodiment cooling the sealed vessel comprises: cooling the sealed vessel to a designated resting temperature; maintaining the resting temperature for a designated length of time; and cooling the rested vessel from the resting temperature to ambient temperature, wherein cooling the sealed vessel to a designated resting temperature is conducted at a rate of from 0.05°F/min. to 4.5°F/min (0.028°C/min. to 2.5°C/min.), wherein the resting temperature is from 130°F to 4.5°F (54.4°C to -15.3°C, and/or wherein the vessel is maintained at the resting temperature for 0.25 to 2.0 hours.

In an aspect of the first embodiment, the sealable and pressurizable vessel contains a support structure which supports a surface of the consolidated UHMWPE unit.

In an aspect of the first embodiment, the sealable and pressurizable vessel is constructed of steel, stainless steel, aluminum, brass or graphite.

In an aspect of the first embodiment, the sealable and pressurizable vessel comprises at least one pressure valve to inert and seal the vessel.

In an aspect of the first embodiment, the annealing temperature is from 250°F to 600°F (121°C to 315°C).

In an aspect of the first embodiment, the annealing designated length of time is from 2 hours to 24 hours.

In an aspect of the first embodiment, heating the sealed vessel in the oven from ambient temperature to an annealing temperature is conducted at a rate of from 2.0°F/min. to 6.8°F/min (1.1°C/min. to 3.5°C/min).

In an aspect of the first embodiment, the pressure within the sealed vessel when the vessel is at the annealing temperature is from 0.50 atm. to 10.0 atm.

In a further aspect of the first embodiment, the oven is inerted when heating to and maintaining the annealing temperature, wherein inerting the oven comprises purging with an inert gas, and/or wherein the inert gas is nitrogen or argon.

In an aspect of the first embodiment, the consolidated UHMWPE unit is a compression molded material or a ram extruded material.

In an aspect of the first embodiment, the UHMWPE unit is a medical grade UHMWPE, and the method further comprises removing surface oxidation material from the annealed medical grade UHMWPE, wherein less than 10 % of surface material is removed due to oxidation, and wherein the medical grade UHMWPE meets ASTM F648 Table 1 UHMWPE Powder requirements.

The foregoing paragraphs have been provided by way of general introduction and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

Fig. 1 shows a chart of comparative levels of surface oxidation obtained according to embodiments of the disclosure.
Fig. 2 shows a chart of comparative Izod Impact Strength obtained according to embodiments of the disclosure.
Fig. 3 shows a chart of comparative Izod Impact Strength of RAM extruded UHMWPE units obtained according to embodiments of the disclosure.

### DETAILED DESCRIPTION OF THE PREFERRED EMBODIMENTS

As used herein, the words "a" and "an" and the like carry the meaning of "one or more." The phrases "selected from the group consisting of," "chosen from," and the like include mixtures of the specified materials. Terms such as "contain(s)," and the like are open terms meaning 'including at least' unless otherwise specifically noted.

Where a numerical limit or range is stated, the endpoints are included. Also, all values and subranges within a numerical limit or range are specifically included as if explicitly written out.

This disclosure provides a method and apparatus for high temperature annealing (HTA) employing a vessel to house the consolidated UHMWPE in an inert environment under pressure during the heating and cooling cycles of the HTA operation. The method is suitable for lab scale samples or may be applied on a production scale to appropriately shaped units of UHMWPE. It is especially suitable for application to medical grade UHMWPE resins where conventional enhancement treatments do not result in materials which meet requirements such as Izod impact strength, for use in orthopedic applications. In addition, the method significantly reduces the amount of surface oxidation which must be removed, and thus, provides cost efficient use of expensive raw materials and lower production costs.

In a first embodiment, a method for high temperature annealing of ultra high molecular weight polyethylene (UHMWPE) is provided. The operational stages of the method include:
i) consolidating a UHMWPE resin powder into a unit of designated shape and size;
ii) placing the consolidated UHMWPE unit into a sealable and pressurizable vessel of size and form to contain the UHMWPE unit;
iii) inerting the interior of the vessel containing the consolidated UHMWPE unit;
iv) sealing the inerted vessel containing the consolidated UHMWPE unit;
v) placing the sealed inerted vessel in an oven at ambient temperature;
vi) heating the sealed vessel in the oven from ambient temperature to an annealing temperature;
vii) maintaining the sealed vessel at the annealing temperature for a designated length of time;
viii) upon completion of the annealing designated time, cooling the sealed vessel;
ix) opening the vessel to vent the inert gas; and
x) removing the high temperature annealed consolidated UHMWPE unit from the vessel.

The UHMWPE material may be any grade wherein high strength and good mechanical properties are required. This method is especially applicable for medical grade resins (DSM) and the inventors have found that the present HTA method is useful in the treatment of resin grades recently introduced to the market. Importantly, the method according to the present disclosure is useful for annealing medical grade UHMWPE which meets ASTM F648 Table 1 UHMWPE Powder requirements.

The UHMWPE may be consolidated to any form suitable for handling and appropriate for the intended end-product. Typically, on a production scale the form will be that of a stave, a rod or a rectangular bar. However, the disclosure is not limited according to a specific shape or geometric form that is suitable. The consolidated UHMWPE may be subjected to any of chemical crosslinking, gamma irradiation, deformation and doping with an antioxidant prior to or after application of the present HTA method.

Importantly, the shape and size of the consolidated unit is compatible with and entirely fits within a sealable and pressurizable vessel such that the unit may be entirely contained within the vessel for the subsequent stages of the present method.

The sealable and pressurizable vessel must be constructed of a material which is impervious, chemically inert to UHMWPE and stable at the elevated temperatures of the annealing process. Materials suitable for construction of the sealable and pressurizable vessel include steel, carbon steel, stainless steel of grades 304, 316, and 312, aluminum, nickel alloys, titanium, brass and graphite.

The sealable and pressurizable vessel is configured to open to allow entry and removal of the consolidated UHMWPE unit and to be closed, sealed and pressurized. The vessel is equipped with at least one, preferably two and optionally more valves to allow for operations including evacuation, flushing and pressurizing of the interior of the closed vessel. The valves are constructed of the same materials listed for construction of the sealable and pressurizable vessel.

The consolidated UHMWPE unit is placed within the open sealable and pressurizable vessel and positioned on a support structure within the vessel to minimize direct contact of the surface of consolidated UHMWPE unit and the interior surface of the vessel. The volume of interior space of the vessel occupied by the consolidated UHMWPE unit is 90 % or less of the total interior volume of the vessel such that upon expansion of the consolidated UHMWPE unit during high temperature annealing space remains between the interior surface of the vessel and the surface of the consolidated UHMWPE unit.

The closed vessel containing the consolidated UHMWPE unit is then inerted by injecting an inert gas through the at least one valve. The inerting process may be accomplished by first evacuating the vessel and then relieving the vacuum with an inert gas. The inert gas may be any gas which is not reactive with the UHMWPE or the material of construction of the vessel and includes nitrogen and argon. Due to cost, nitrogen may be preferred.

Alternatively, when the vessel has two or more valves, the vessel can be flushed with an inert gas to remove air until minimal or no oxygen is present. At that point exit valves can be closed and the pressure within the vessel adjusted to the target pressure to be employed for the HTA process. The pressure is adjusted such that the pressure within the sealed vessel at the annealing temperature is from 0.50 atm. to 10.0 atm., preferably 1.0 atm. to 8.0 atm. and most preferably 2.0 atm. to 6.0 atm. The vessel containing the UHMWPE unit is then sealed once inerted and adjusted to the target pressure.

The pressurized and sealed vessel containing the UHMWPE unit is then placed in an oven capable to hold one or more of the vessels and capable to heat the one or more vessels to an annealing temperature from 250°F to 600°F, preferably 300°F to 590°F and most preferably 350°F to 580°F.

The oven may be a laboratory scale oven or a production scale oven for larger scale UHMWPE units. In one preferred aspect, the oven is a commercial grade inert oven and during the annealing process the interior of the oven may be inerted by purging and flowing nitrogen or other inert gas within the oven.

The pressurized and sealed vessel containing the UHMWPE unit is placed in the oven at ambient temperature and then heated to the annealing temperature at a rate of from 2.0°F/min. to 6.8°F/min, preferably 2.2°F/min. to 3.8°F/min and most preferably 2.5°F/min. to 3.5°F/min.

The pressurized and sealed vessel containing the UHMWPE unit is maintained at the annealing temperature for from 2 hours to 24 hours, preferably 4 hours to 24 hours and most preferably 8 hours to 24 hours. The length of time the vessel is maintained at the annealing temperature is determined by factors such as the size and shape of the UHMWPE unit and the grade of the UHMWPE. It is important that the entire UHMWPE unit uniformly reaches an equilibrium temperature at the annealing temperature and is maintained under pressure for sufficient time to obtain the target strength and mechanical properties. The interior of the oven may or may not be inerted during the time when the temperature is maintained at the annealing temperature.

Upon completion of the annealing time, the sealed vessel is cooled and once cooled the pressure is relieved by opening the at least one valve. The high temperature annealed consolidated UHMWPE unit is then removed from the vessel.

The cooling of the sealed vessel from the annealing temperature is controlled such that the sealed vessel is first cooled to a designated resting temperature of from 130°F to 4.5°F, preferably 120°F to 40°F, and most preferably 110°F to 60°F.

The rate of cooling the sealed vessel from the annealing temperature to the resting temperature is from 0.05°F/min. to 4.5°F/min, preferably 0.05°F/min. to 2.0°F/min, and most preferably 0.05°F/min. to 1.0°F/min.

The sealed vessel is maintained at the resting temperature for a designated length of time from 0.25 hours to 2.0 hours, preferably 0.5 hours to 2.0 hours and most preferably 1.0 hours to 2.0 hours.

Following completion of the resting time the sealed vessel is cooled to ambient temperature and the pressure vented. The vessel is opened, and the high temperature annealed consolidated UHMWPE unit removed.

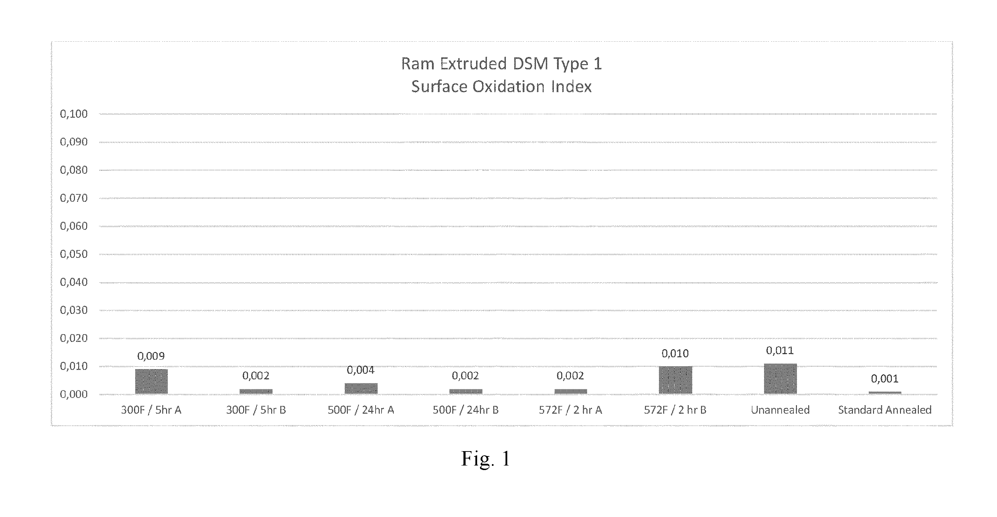

The high temperature annealed consolidated UHMWPE unit is inspected for surface oxidation and any such oxidation material is mechanically removed. The HTA method of this disclosure results in low surface oxidation and therefore low waste costs. The amount of surface oxidation material that is removed in less than 10% of the UHMWPE unit, preferably, less than 5% and most preferably, less than 2%. Comparative results of surface oxidation levels (SOI) obtained according to the method disclosed herein are shown in Fig. 1.

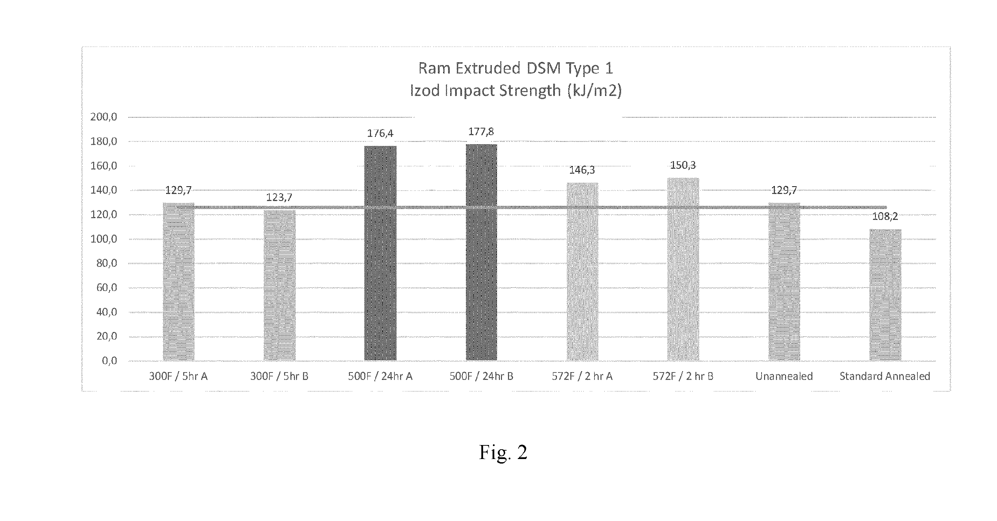

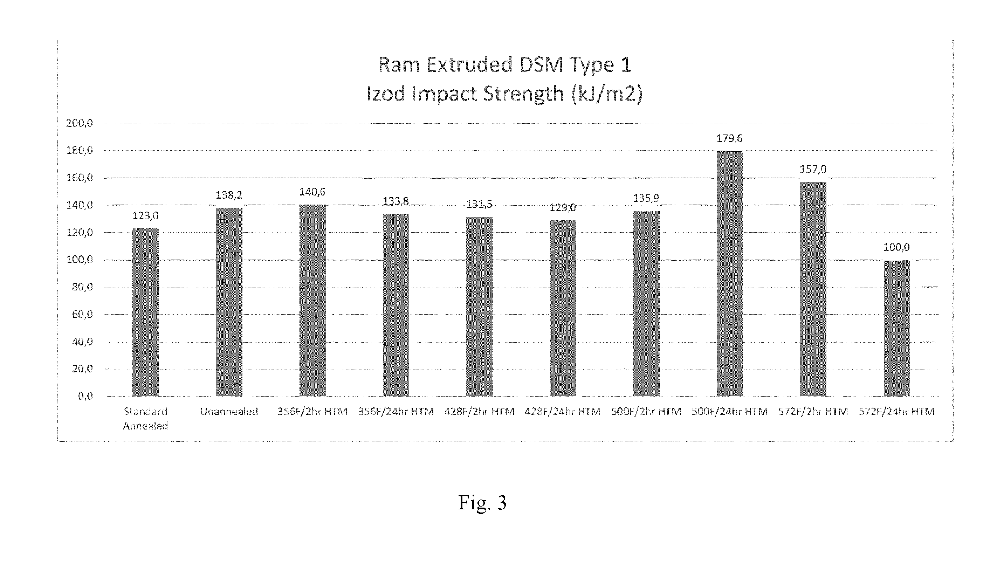

Additionally, the high temperature annealed consolidated UHMWPE units prepared in the sealable and pressurizable vessels of the present disclosure have superior toughness according to Izod Impact Strength as shown in Figs. 2 and 3.

The method of this disclosure provides a high temperature annealing process and apparatus for manufacturing production scale medical grade UHMWPE units which have superior toughness while maintaining minimal surface oxidation and the resulting waste.

### EXAMPLES:

The methods of the present disclosure are exemplified in the following non-limiting Examples. Post consolidation annealing trials according to the present technology were performed using 2-inch ram extruded medical grade UHMWPE. In following examples, DSM Type 1 medical grade UHMWPE resin per ASTM F648-21 with a viscosity number between 2000-3200 mL/g was utilized.

Annealing trials included placing a ram extruded UHMWPE sample on a stainless steel rack inside a vessel, purging the vessel with nitrogen and placing the vessel inside a commercial oven. The vessel was constructed of a seamless steel pipe with threaded steel end caps, a bronze ball valve to inert the vessel and a brass air safety relief valve. Thread sealant tape was utilized to seal the vessel at the end caps.

The oven was heated to max temperatures of 300°F (Examples 1A & 1B), 500°F (Examples 2A & 2B) and 572°F (Examples 3A & 3B) and then soaked for 5 hours, 24 hours or 2 hours at temperature, respectively. The oven was cooled prior to removal of the samples from the vessel. The samples were subsequently analyzed for physical, mechanical and oxidation properties and compared to unannealed (Example 4) and standard commercially annealed material (Example 5).

Average values of the results obtained are provided in Table 1. Individual data points and average results for each of the examples are provided in Tables 2 to 9. ASTM F648-21 Requirements for UHMWPE Fabrication Forms of Type 1 material were used for comparison. Table 1 indicates that with standard commercial annealing practices, the ram extruded medical grade UHMWPE material did not meet minimum Izod impact strength as specified by ASTM F648-21 for Type 1 material (minimum 126 kJ/m2).

In contrast, the data of Table 1 shows that significantly improved average Izod impact strength was obtained with the samples which were treated with post consolidation annealing at 300°F for 5 hours, 500°F for 24 hours and at 572°F for 2 hours, according to the present disclosure compared with the standard commercial annealing practices employed. Table 1 further indicates that when samples were annealed at 500°F for 24 hours and 572°F for 2 hours according to the present disclosure the samples passed ASTM F648-21 Type 1 Izod impact strength values. Furthermore, oxidation levels as indicated by a Surface Oxidation Index (SOI) and Bulk Oxidation Index (BOI) remained at negligible values after the annealing treatments. SOI is defined according to 3.1.5 of ASTM F2102 as the average of the oxidation indices from the sample's articular surface, or the surface of interest, to a depth of 3-mm subsurface. BOI is defined according to 3.1.1 of ASTM F2102 as the average of the oxidation indices collected over a 500-µm section at the center of the sample. The Trans-Vinylene Index (TVI) is described in ASTM F2381-19.

All other mechanical and physical properties met ASTM F648-21 Type 1 Requirements for Fabricated UHMWPE Forms in this example.

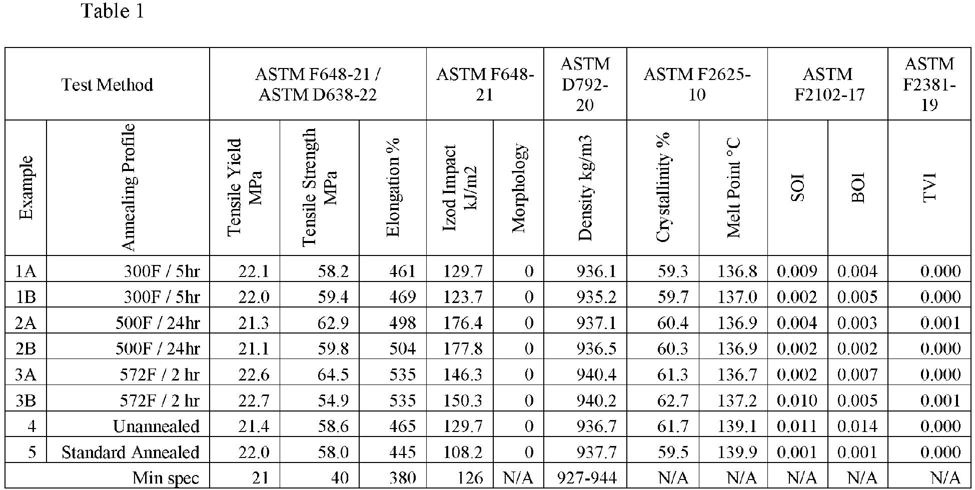

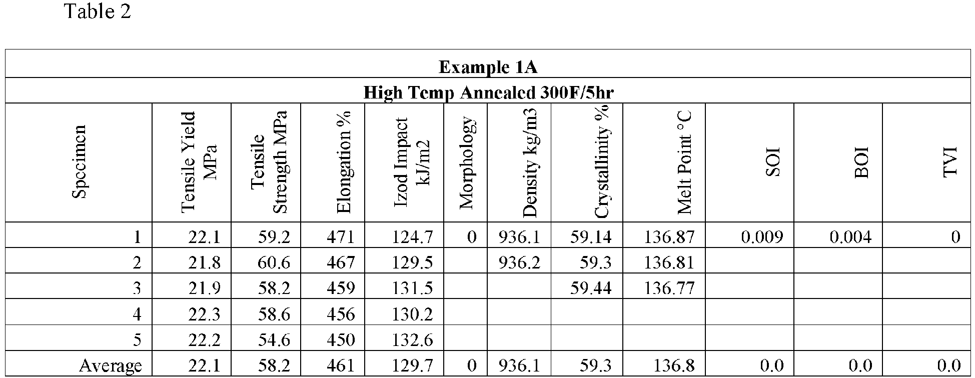

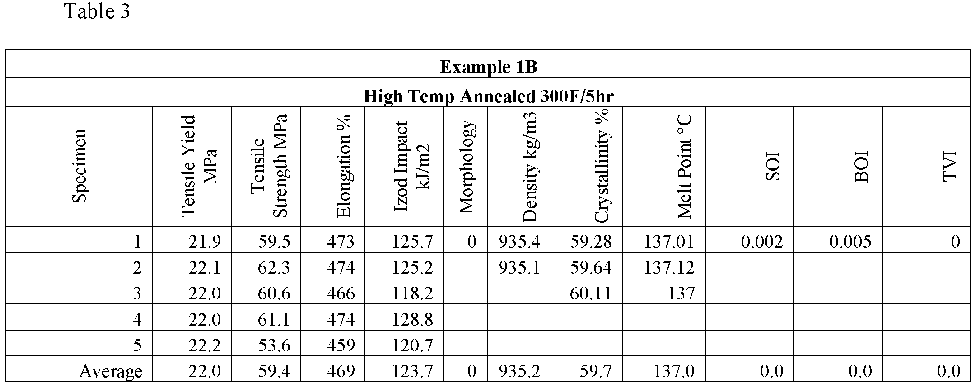

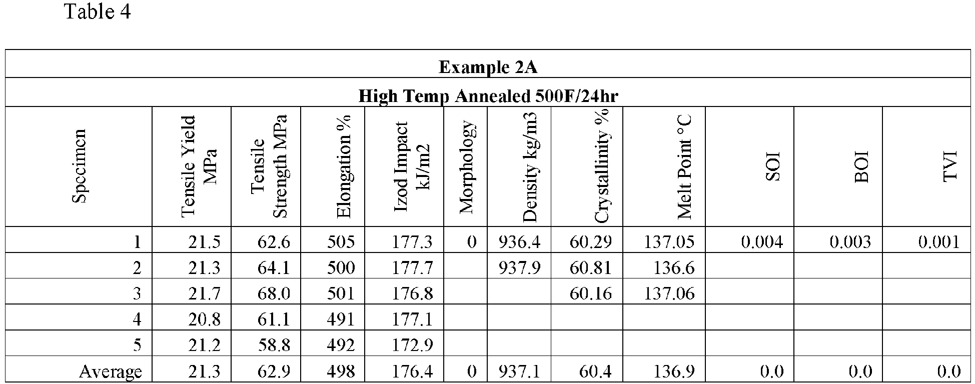

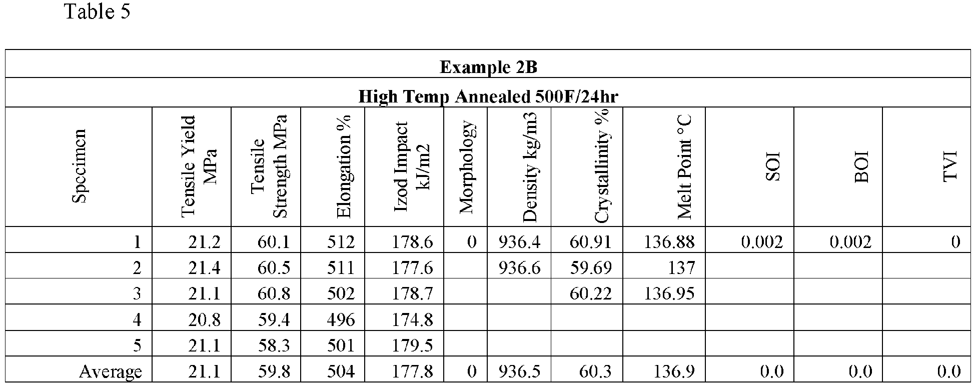

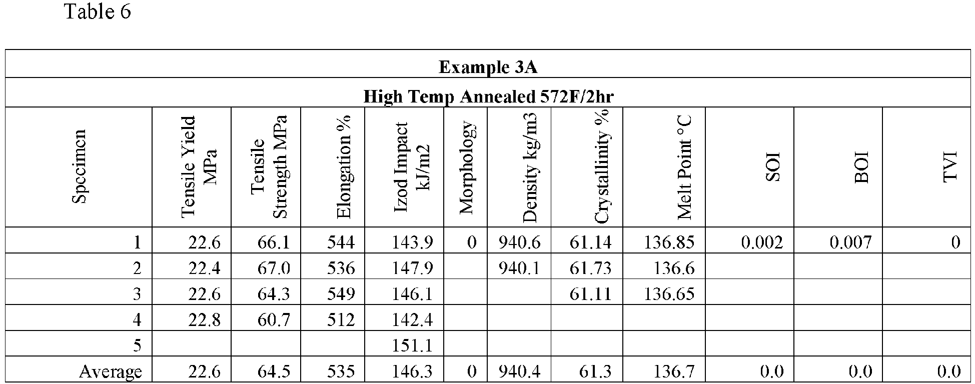

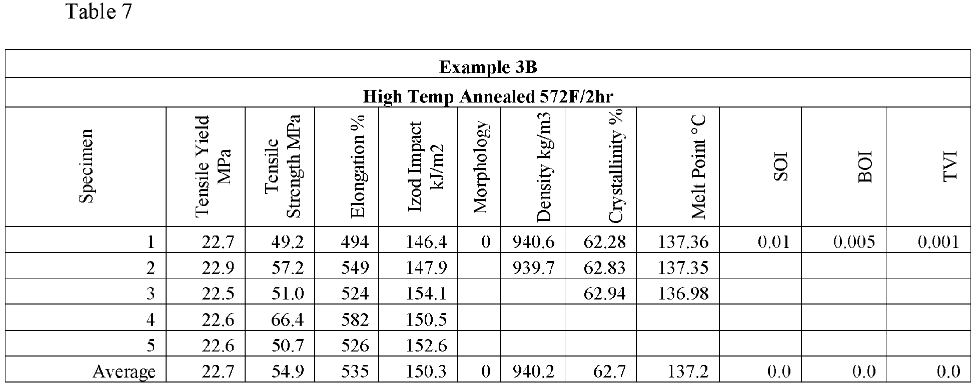

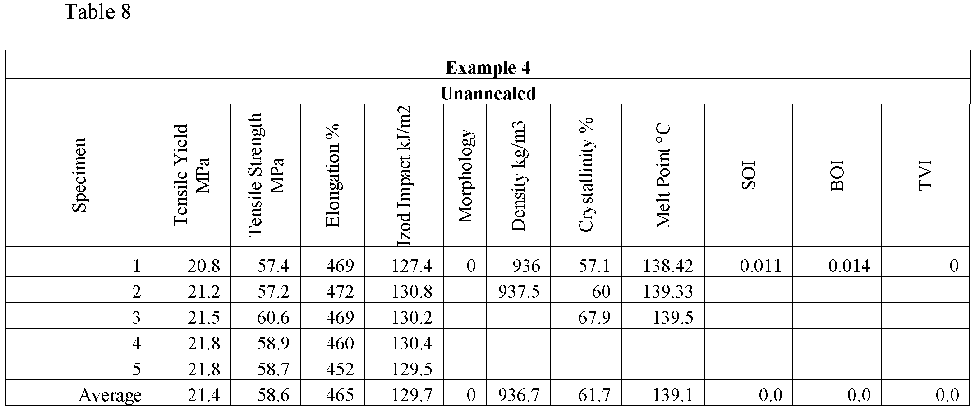

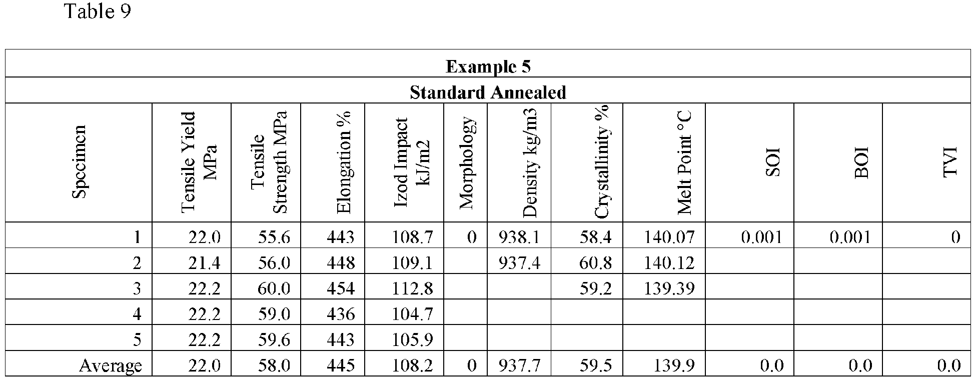

The above description is presented to enable a person skilled in the art to make and use the invention and is provided in the context of a particular application and its requirements. Various modifications to the preferred embodiments will be readily apparent to those skilled in the art, and the generic principles defined herein may be applied to other embodiments and applications without departing from the spirit and scope of the invention. Thus, this invention is not intended to be limited to the embodiments shown but is to be accorded the widest scope consistent with the principles and features disclosed herein. In this regard, certain embodiments within the invention may not show every benefit of the invention, considered broadly.

## Claims

1. A method for high temperature annealing of ultra high molecular weight polyethylene (UHMWPE), comprising:
consolidating a UHMWPE resin powder into a unit of designated shape and size;
placing the consolidated UHMWPE unit into a sealable and pressurizable vessel of size and form to contain the UHMWPE unit;
inerting the interior of the vessel containing the consolidated UHMWPE unit;
sealing the inerted vessel containing the consolidated UHMWPE unit;
placing the sealed inerted vessel in an oven at ambient temperature;
heating the sealed vessel in the oven from ambient temperature to an annealing temperature;
maintaining the sealed vessel at the annealing temperature for a designated length of time;
upon completion of the annealing designated time, cooling the sealed vessel;
opening the vessel to vent the inert gas; and
removing the high temperature annealed consolidated UHMWPE unit from the vessel.

2. The method of claim 1, wherein cooling the sealed vessel comprises:
cooling the sealed vessel to a designated resting temperature;
maintaining the resting temperature for a designated length of time; and
cooling the rested vessel from the resting temperature to ambient temperature.

3. The method of claim 1, wherein the sealable and pressurizable vessel contains a support structure which supports a surface of the consolidated UHMWPE unit.

4. The method of claim 1, wherein the sealable and pressurizable vessel is constructed of steel, stainless steel, aluminum, brass or graphite.

5. The method of claim 1, wherein the sealable and pressurizable vessel comprises at least one pressure valve to inert and seal the vessel.

6. The method of claim 1, wherein the annealing temperature is from 250°F to 600°F (121°C to 315°C).

7. The method of claim 1, wherein the annealing designated length of time is from 2 hours to 24 hours.

8. The method of claim 1, wherein heating the sealed vessel in the oven from ambient temperature to an annealing temperature is conducted at a rate of from 2.0°F/min. to 6.8°F/min (1.1°C/min. to 3.5°C/min).

9. The method of claim 2, wherein cooling the sealed vessel to a designated resting temperature is conducted at a rate of from 0.05°F/min. to 4.5°F/min (0.028°C/min. to 2.5°C/min.).

10. The method of claim 2, wherein the resting temperature is from 130°F to 4.5°F (54.4°C to -15.3°C).

11. The method of claim 2, wherein the vessel is maintained at the resting temperature for 0.25 to 2.0 hours.

12. The method of claim 1 wherein the pressure within the sealed vessel when the vessel is at the annealing temperature is from 0.50 atm. to 10.0 atm.

13. The method of claim 1 further comprising inerting the oven when heating to and maintaining the annealing temperature,
preferably wherein inerting the oven comprises purging with an inert gas, further preferably
wherein the inert gas is nitrogen or argon.

14. The method of claim 1, wherein the consolidated UHMWPE unit is a compression molded material or a ram extruded material.

15. The method of claim 1, wherein the UHMWPE unit is a medical grade UHMWPE, preferably
(a) wherein the method further comprises removing surface oxidation material from the annealed medical grade UHMWPE, preferably
wherein less than 10 % of surface material is removed due to oxidation, and/or
(b) wherein the medical grade UHMWPE meets ASTM F648 Table 1 UHMWPE Powder requirements.
